(19) Europäisches Patentamt / European Patent Office / Office européen des brevets

(11) **EP 3 012 022 A1**

(12) **EUROPEAN PATENT APPLICATION**
published in accordance with Art. 153(4) EPC

(43) Date of publication:
**27.04.2016 Bulletin 2016/17**

(21) Application number: **14814162.5**

(22) Date of filing: **20.06.2014**

(51) Int Cl.:
**B01J 35/02** (2006.01)   **B01J 23/58** (2006.01)
**B01J 37/02** (2006.01)   **C01B 3/04** (2006.01)

(86) International application number:
**PCT/JP2014/066451**

(87) International publication number:
**WO 2014/203996 (24.12.2014 Gazette 2014/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.06.2013   JP 2013130357**

(71) Applicant: **Toto Ltd.**
**Fukuoka 802-8601 (JP)**

(72) Inventors:
- **TOKUDOME, Hiromasa**
  **Kitakyushu-shi**
  **Fukuoka 802-8601 (JP)**
- **OKUNAKA, Sayuri**
  **Kitakyushu-shi**
  **Fukuoka 802-8601 (JP)**

(74) Representative: **Grünecker Patent- und Rechtsanwälte**
**PartG mbB**
**Leopoldstraße 4**
**80802 München (DE)**

(54) **VISIBLE LIGHT RESPONSIVE PHOTOCATALYST MATERIAL**

(57)    Disclosed is a visible light responsive photocatalytic member having a substrate covered with photocatalyst particles which are capable of generating hydrogen, wherein the said particles are made so as to be compatible in both high crystallinity and refining of the primary particles thereof. The photocatalytic member of the present invention is the visible light responsive photocatalytic member having the primary particle diameter thereof of 100 nm or less, wherein a photocatalytic layer containing the photocatalyst particles, which are capable of generating hydrogen, is immobilized on the substrate. More preferably, the said material has pores with the size of 10 to 200 nm inclusive among the photocatalyst particles. With this, water decomposition with a high photocatalytic activity under visible light irradiation can be realized.

FIG. 1

**Description**

FIELD OF INVENTION

The present invention relates to a visible light responsive photocatalytic member capable of generating hydrogen by a photolysis reaction of water.

BACKGROUND ART

Visible light responsive photocatalysts can utilize visible light which contained in large amount in sunlight, and are expected to be applied to photodecomposition of organic substances and production of hydrogen by splitting water. Especially, photocatalysts for splitting water to produce hydrogen have drawn attention as photocatalysts used for a generation method of hydrogen by utilizing a renewable energy. Consequently, the demand for photocatalysts for splitting water having a high activity has increased year after year.

Rhodium-doped strontium titanate ($Rh$-$SrTiO_3$) which is a visible light responsive photocatalyst is known to function as a photocatalyst for hydrogen generation having very high ability to generate hydrogen from water (Non-Patent Literature 1).

Also, in recent year, a substrate photocatalytic electrode having a photocatalytic portion which is formed by coating a paste containing rhodium-doped strontium titanate ($Rh$-$SrTiO_3$) on an ITO transparent electrode, followed by firing the paste is reported (Patent Literature 1).

Visible light responsive photocatalyst particles for hydrogen generation including $Rh$-$SrTiO_3$ have hitherto been prepared by a solid-phase reaction method or a hydrothermal synthesis method. In these methods, a crystallization treatment at about 1000°C has been necessary. Photocatalyst particles for hydrogen generation obtained by these methods have a primary particle diameter of approximately several hundred nanometers to a few micrometers. And also, further improvement with regard to the crystallinity of the photocatalyst particles has been required. In addition, when coarse particles as mentioned above are used by fixing on a substrate, number of contact points with the substrate per unit area is small, therefore, adhesion to the substrate is weak. Consequently, phenomena that coarse particles disadvantageously remove from the substrate in a short period of time have occurred. Moreover, an attempt to obtain photocatalyst particles having a much higher activity by using coarse particles was restricted. Accordingly, photocatalyst particles having a much higher ability to generate hydrogen under visible light, namely, fine photocatalyst particles having high crystallinity and a large specific surface area are necessary.

[Citation List]

[Patent Literature]

[PTL 1] JP 2012-52184A

[Non-Patent Literature]

[NPTL 1] Sasaki, et al., J. Phys. Chem. C, pp 17536-17542, 2009.

SUMMARY OF THE INVENTION

The present inventors have now found that photocatalyst particles for hydrogen generation having a primary particle diameter of 100 nm or less can be produced.

Accordingly, the present invention has an object to provide a visible light responsive photocatalytic member comprising a photocatalytic layer which comprises photocatalyst particles having a primary particle diameter of 100 nm or less and being capable of generating hydrogen by splitting water under visible light irradiation.

The present invention relates to a visible light responsive photocatalytic member comprising a substrate and a photocatalytic layer fixed on the substrate, wherein the photocatalytic layer comprises photocatalyst particles that have a primary particle diameter of not more than 100 nm and are capable of generating hydrogen by splitting water under visible light irradiation.

According to the visible light responsive photocatalytic member of the present invention, hydrogen is able to be generated by splitting water under visible light irradiation due to a high photocatalytic activity thereof.

BRIEF DESCRIPTION OF THE DRAWINGS

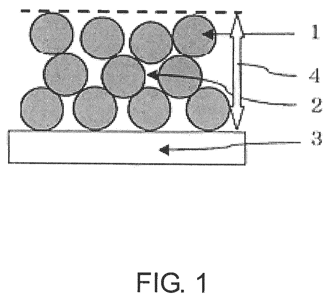

[FIG. 1] is a typical view of a cross-section of a visible light responsive photocatalytic member according to the present invention. In Fig. 1, photocatalyst particles 1 for hydrogen generation are, while forming pores 2, arranged as a photocatalytic layer having thickness 4 on substrate 3.

DESCRIPTION OF THE INVENTION

The visible light responsive photocatalytic member according to the present invention is a visible light responsive photocatalytic member which can generate hydrogen by splitting water by absorbing visible light. Further, the visible light responsive photocatalytic member according to the present invention is characterized in that a photocatalytic layer comprising photocatalyst particles that have a primary particle diameter of 100 nm or less and are capable of generating hydrogen by splitting water under visible light irradiation (hereinafter referred to as "photocatalyst particles for hydrogen generation", or simply "photocatalyst particles") is fixed on a substrate.

The visible light responsive photocatalytic member according to the present invention shows properties of a semiconductor having an optical band gap. In addition, the visible light responsive photocatalytic member according to the present invention refers to a photocatalytic member in which electron transition such as interband transition by absorbing light including visible light having wavelength of 420 nm or longer leads to the production of excited electrons in a conduction band (or electron acceptor level present within the bandgap), and the production of excited holes in a valence band (or electron donor level present within the bandgap), whereby reaction objects can be reduced and oxidized.

Kind of photocatalyst particles for hydrogen generation

Photocatalyst particles for hydrogen generation in the present invention show properties of a semiconductor having an optical band gap. In addition, in photocatalyst particles for hydrogen generation in the present invention, a reaction such as following takes place by absorbing light including visible light having wavelength of 420 nm or longer. That is, electron transfer such as interband transition leads to the production of excited electron in a conduction band (or electron acceptor level present within the bandgap) so that photocatalyst particles for hydrogen generation reduce a reaction object. Also, electron transfer leads to the production of excited hole in a valence band (or electron donor level present within the bandgap) so that photocatalyst particles for hydrogen generation oxidize a reaction object. In other words, the conduction band (or electron acceptor level present within bandgap) of the photocatalyst particles for hydrogen generation may be located at a negative position relative to the reduction potential of water (0 V vs. NHE (standard hydrogen electrode potential)). The valence band (or electron donor level present within bandgap) of the photocatalyst particles for hydrogen generation may be located at a positive position relative to the oxidation potential of a oxidation reaction object that is present together with water. Here, example of the oxidation reaction object in the present invention includes organic substances such as a high molecular weight compound and a small molecular weight compound, and transition metal ions such as ions of iron, cobalt, manganese, and nickel. It is preferable that the oxidation reaction object is such as a high molecular weight compound and a small molecular weight compound. By combining the oxidation of organic substance and the hydrogen generating reaction by splitting water as mentioned above, water purification by decomposition of organic substances present as pollutants and hydrogen generation can be simultaneously realized.

Examples of photocatalyst particles for hydrogen generation used in the present invention include Rh-doped $SrTiO_3$ ($SrTi_{1-x}Rh_xO_3$: x = 0.002 to 0.1), Ir-doped $SrTiO_3$ ($SrTi_{1-x}Ir_xO_3$: x = 0.002 to 0.1), Cr-doped $SrTiO_3$ ($SrTi_{1-x}Cr_xO_3$: x = 0.002 to 0.1), Cr- and Ta-doped $SrTiO_3$ ($SrTi_{1-x-y}Cr_xTa_yO_3$: x = 0.002 to 0.1, y=0.002 to 0.1), La- and Rh-doped $SrTiO_3$ ($SrTi_{1-x-y}La_xRh_yO_3$: x=0.005 to 0.1, y=0.005 to 0.1), oxynitrides or nitrides containing transition metals or typical metals, for example, GaN-ZnO solid solution, $LaTiO_2N$, $BaTaO_2N$, $BaNbO_2N$, TaON, $Ta_3N_5$, and $Ge_3N_4$, and copper composite sulfides or acid sulfides containing typical metals such as Ga, In, and Al, for example, $CuGaS_2$, $CuInS_2$, $Cu(Ga,In)S_2$, $CuGaSe_2$, $CuInSe_2$, $Cu(Ga,In)Se_2$, $Cu_2ZnSnS_4$(CZTS), and $Cu_2ZnSn(S,Se)_4$.

In the present invention, examples of more preferred photocatalyst particles for hydrogen generation include Rh-doped $SrTiO_3$ ($SrTi_{1-x}Rh_xO_3$: x = 0.005 to 0.05), Ir-doped $SrTiO_3$ ($SrTi_{1-x}Ir_xO_3$: x = 0.005 to 0.05), La- and Rh-doped $SrTiO_3$ ($SrTi_{1-x-y}La_xRh_yO_3$; x=0.01 to 0.08 and y=0.01 to 0.08), GaN-ZnO solid solution, $LaTiO_2N$, $BaTaO_2N$, $BaNbO_2N$ TaON, $Ta_3N_5$, $Ge_3N_4$, $CuGaS_2$, $CuInS_2$, $Cu(Ga,In)S_2$, $CuGaSe_2$, $CuInSe_2$, $Cu(Ga,In)Se_2$, $Cu_2ZnSnS_4$(CZTS), and $Cu_2ZnSn(S,Se)_4$.

In the present invention, photocatalyst particles for hydrogen generation are most preferably Rh-doped $SrTiO_3$ ($SrTi_{1-x}Rh_xO_3$; x=0.01 to 0.04).

Primary particle diameter of photocatalyst particles for hydrogen generation

The primary particle diameter of the photocatalyst particles for hydrogen generation in the present invention is 100 nm or less, preferably 70 nm or less, more preferably 50 nm or less. By virtue of this, the photocatalyst particles for hydrogen generation have an increased surface area per unit weight, wherein the particles are in contact with water. Thus, the number of hydrogen generating reaction sites by reducing water is increased, and, consequently, hydrogen can be generated with a high efficiency. In addition, by irradiating visible light to the particles, the distance of diffusion of excited electrons and excited holes produced within the particles from the inside of the particles to the surface of the particles becomes short. Thus, a reaction for generating hydrogen by reducing water can high-efficiently occur at the surface of the particles with the exited electrons and the exited holes each diffused thereto.

Regarding a method for measuring the primary particle diameter of the photocatalyst particles for hydrogen generation, for example, the following method may be mentioned. The photocatalyst particles for hydrogen generation are observed by a scanning electron microscope (manufactured by Hitachi, Ltd., "S-4100," hereinafter referred to also as "SEM") at a magnification of 40000. The primary particle diameter can be defined by an average value of 50 crystal particles in observation, each of which is approximated by a circle.

Crystallinity of photocatalyst particles for hydrogen generation

The photocatalyst particles for hydrogen generation used in the present invention have high crystallinity and a small primary particle diameter.

Supporting co-catalyst on photocatalyst particles for hydrogen generation

According to a preferred embodiment of the present invention, when the photocatalyst particles for hydrogen generation are used as a photocatalyst for photolysis of water, in order that swift hydrogen generation occur, it is preferable to support a co-catalyst on a surface of the photocatalyst particles for hydrogen generation.

At least one type of metal particles selected from the group consisting of platinum, ruthenium, iridium, and rhodium, or a mixture of these type of metal particles can be used as a co-catalyst for hydrogen generation. Metal particles of platinum and ruthenium are more preferably used. The co-catalyst that is supported in a particulate form on the surface of the photocatalyst particles for hydrogen generation allows activation energy in the reduction reaction of water to be reduced. Thus, swift hydrogen generation can be realized.

Preferred examples of methods for supporting a co-catalyst include impregnation methods and adsorption methods. In the impregnation methods and adsorption methods, photocatalyst particles are dispersed in a solution containing a co-catalyst precursor dissolved therein to adsorb the co-catalyst on the surface of the photocatalyst. Examples of co-catalyst precursors include chlorides, nitrates, and ammine salts of metals such as platinum, ruthenium , iridium, rhodium and the like.

Preferably, after the co-catalyst precursor is supported on the surface of the photocatalyst particles, the co-catalyst precursor is reduced. When the co-catalyst precursor is reduced to a metal state, the activity is enhanced. Preferable reduction methods of the co-catalyst precursor include a photoreduction method and a chemical reduction method. The photoreduction method includes irradiating the photocatalyst particles with ultraviolet light or visible light to produce excited electrons within the photocatalyst particles, thereby allowing the co-catalyst precursor adsorbed on the photocatalyst to be reduced. The chemical reduction method includes reducing the co-catalyst precursor under a hydrogen gas stream of 400°C or below, preferably 300°C or below. The co-catalyst supported by the above methods is in a particulate form, and, the co-catalyst is supported on the surface of the photocatalyst particles for hydrogen generation. As a result, the co-catalyst allows the activation energy in the reduction reaction of water to be reduced, contributing to swift hydrogen generation.

Rhodium-doped strontium titanate that is one of the most preferred examples of the photocatalyst particles for hydrogen generation according to the present invention will be described below.

Crystallinity of rhodium-doped strontium titanate particles

Rhodium-doped strontium titanate (Rh-SrTiO$_3$) particles as photocatalyst particles for hydrogen generation according to the present invention have high crystallinity and a small primary particle diameter.

The present inventors have found that particles that have a larger absorbance derived from Rh$^{4+}$ in crystals as well as a smaller absorbance derived from oxygen defects present in crystals as compared with conventional rhodium-doped strontium titanate particles, have a high crystallinity and a high photocatalytic activity. Thus, a recombination reaction between excited electrons and excited holes within the photocatalyst particles for hydrogen generation, the reaction mainly start to occur at an oxygen defect level, can be prevented. As a result, reduction of water and a charge recombination reaction between the excited electrons of the photocatalyst particles for oxygen generation and at an interface of the two types of the particles are promoted, contributing to an efficient water-splitting reaction.

The formation of oxygen defects is generally considered as one cause of a lowering in crystallinity of metal oxides. The larger the number of oxygen defect sites in metal oxides, that is, the larger the number of oxygen defects, the lower the degree of crystallization of metal oxides, that is, the lower the crystallinity, due to disturbance of periodicity of crystals.

The number of oxygen defects of the rhodium-doped strontium titanate particles used in the present invention can be determined using absorbance A (=1-spectral reflectance R). The absorbance A can be quantitatively determined by diffuse reflection spectrum measurement of powders of rhodium-doped strontium titanate particles in the ranges of ultraviolet light, visible light, and near-infrared light. Oxygen defects present in metal oxides, for example, titanium oxide, cause a donor level of $Ti^{3+}$. The donor level of $Ti^{3+}$ is caused in a range of an electron energy that is lower by approximately 0.75 to 1.18 eV from the lower end of a conduction band composed of Ti-3d orbital in a band structure of titanium oxide. Further, an absorption spectrum of titanium oxide having oxygen defects is known to have, as a shape thereof, a broad absorption band in a range from a visible light to a near-infrared light (Cronemeyer et al., Phys. Rev. No. 113, p1222-1225, 1959). The present inventors have now confirmed as follows. Measurement of a diffuse reflection spectrum of rhodium-doped strontium titanate particles shows the rhodium-doped strontium titanate particles, as with titanium oxide, have a broad absorption band in a range of a visible light to a near-infrared light. Based on these facts, the present inventors have found that the degree of improvement in crystallinity provided by raising the firing temperature can be quantified by measuring absorption in a range of a near-infrared light.

The present inventors also have found that the state of the rhodium is also important for rhodium-doped strontium titanate particles to have a high photocatalytic activity and the crystallinity increases with increasing light absorption derived from tetravalent rhodium ($Rh^{4+}$) in strontium titanate crystals. The following mechanism will demonstrate the effect of valence of rhodium on crystallinity. However, the present invention is not limited to this mechanism.

In general, the valence of rhodium is known to be divalent, trivalent, tetravalent, and pentavalent. Among rhodium having these valences, trivalent rhodium ($Rh^{3+}$) is most stable in the atmosphere with room temperature. When a starting material containing trivalent rhodium is used, it is known that, when strontium titanate ($SrTiO_3$) is fired at high temperatures for crystallization, sites of tetravalent titanium ($Ti^{4+}$) are doped with rhodium. In this case, when crystal site of $Ti^{4+}$ is substitutionally doped with $Rh^{3+}$, oxygen defects disadvantageously occur in order to keep charge neutrality. It have been found that, in order to reduce the oxygen defects, when crystal sites of $Ti^{4+}$ are doped with $Rh^{4+}$ that can maintain the charge neutrality of crystals, crystallinity of the particles is improved.

Accordingly, the present inventors have found that optical property parameters of rhodium-doped strontium titanate particles having a high photocatalytic activity can be clarified by measuring the particles in the following method.

Methods for the measurement of optical properties of rhodium-doped strontium titanate particles used in the present invention may use an ultraviolet-visible-near-infrared spectrophotometer (manufactured by Japan Spectroscopic Co., Ltd., "V-670") equipped with an integrating sphere unit. Specifically, an integrating sphere unit (manufactured by Japan Spectroscopic Co., Ltd., "ISV-722") is mounted on the ultraviolet-visible-near-infrared spectrophotometer. Alumina sintered pellets are used in baseline measurement. On that basis, a spectral reflectance R can be determined by measuring a diffuse reflection spectrum of a sample prepared by filling 30 mg of particle powder into a window portion (5 mm$\phi$) in a trace powder cell (manufactured by Japan Spectroscopic Co., Ltd., "PSH-003") at a filling fraction of not less than 50%. The optical properties of rhodium-doped strontium titanate particles are determined by measuring a diffuse reflection spectrum in a wavelength range of 200 to 2500 nm with the spectrophotometer In the rhodium-doped strontium titanate particles used in the present invention, light absorbance $A_{570}$ at wavelength 570 nm (=1-$R_{570}$[spectral reflectance at wavelength 570 nm]) is not less than 0.6, and light absorbance $A_{1800}$ at wavelength 1800 nm (=1-$R_{1800}$[spectral reflectance at wavelength 1800 nm]) is not more than 0.7, where the two absorbances are determined under conditions that absorbance $A_{315}$ at wavelength 315 nm (=1-$R_{315}$[spectral reflectance at wavelength 315 nm]) is in the range of 0.86 to 0.87. The absorbance $A_{570}$ attributes to light absorption derived from $Rh^{4+}$ in strontium titanate crystals. The absorbance $A_{1800}$ attributes to light absorption derived from oxygen defects in crystals. In a preferred embodiment, the absorbance $A_{570}$ at wavelength 570 nm is 0.6 (inclusive) to 0.8 (exclusive). In another preferred embodiment, the absorbance $A_{1800}$ at wavelength 1800 nm is 0.3 (inclusive) to 0.7 (inclusive).

Primary particle diameter of rhodium-doped strontium titanate particles

The rhodium-doped strontium titanate particles as photocatalyst particles for hydrogen generation in the present invention has a very small primary particle diameter. The primary particle diameter is preferably not more than 100 nm, more preferably not more than 70 nm. This small primary particle diameter allows the rhodium-doped strontium titanate particles to have a high specific surface area. Further, the area of contact with a substance to be decomposed increases, resulting in a high photocatalytic activity of the particles. Much more preferably, the primary particle diameter is not more than 50 nm.

Structure of rhodium-doped strontium titanate particles

The rhodium-doped strontium titanate particles as photocatalyst particles for hydrogen generation used in the present invention have a large specific surface area. In the present invention, use of an $R_{SP}$ value of the rhodium-doped strontium titanate particles as an index has identified that the rhodium-doped strontium titanate particles have a large surface area and that a secondary particle, that is, a powder, has a high porosity wherein the secondary particle is made of the rhodium-doped strontium titanate particles.

The $R_{SP}$ value is an index correlated with the amount of water molecules adsorbed on the surface of particles and thereby depends upon a surface area of particles in contact with water when the particles are dispersed in water. The rhodium-doped strontium titanate particles used in the present invention are utilized as a photocatalyst for splitting water when the particles are in contact with water. In this case, water permeates gaps among primary particles or pores within a secondary particle, and thus the surface of the particles is in contact with water. Accordingly, in the rhodium-doped strontium titanate particles used in the present invention, use of the $R_{SP}$ value as an index to determine the surface area of particles on which water is adsorbed is useful in obtaining particles having a large specific surface area. A method for the measurement of the specific surface area of particles includes a BET analysis based on nitrogen adsorption and desorption measurement, as a main conventional method. In this BET analysis, however, nitrogen is used as a probe, and the molecular diameter of nitrogen is so small that nitrogen is disadvantageously adsorbed on the surface of pores that water cannot permeate. The method for the measurement of the specific surface area by a BET analysis is not effective when the object is particles with water adsorbed thereon.

The $R_{SP}$ value is represented by the following equation. Further, the $R_{SP}$ value can be measured with a pulse NMR particle boundary evaluation apparatus (for example, "Acorn area," manufactured by Nihon Rufuto Co., Ltd.).

$$R_{SP}=(R_b-R_{av})/R_b \qquad (1)$$

wherein $R_{av}$ is a mean relaxation time constant. The relaxation time constant is an inverse number of a relaxation time of water in contact with or adsorbed on the surface of particles when the particles are dispersed in water. The mean relaxation time constant is a mean value of determined relaxation time constants.

$R_b$ is a relaxation time constant of blank water not containing particles.

The larger the $R_{sp}$ value, the larger the interaction of the surface of particles with water. This means that a large $R_{sp}$ indicates a large contact area between particles and water, and thus a large specific surface area of particles.

The $R_{SP}$ value of the rhodium-doped strontium titanate particles used in the present invention is preferably not less than 0.86, more preferably not less than 0.88. The $R_{SP}$ value is preferably not more than 10.

Composition of rhodium-doped strontium titanate

The composition of rhodium-doped strontium titanate as photocatalyst particles for hydrogen generation in the present invention may be represented by $SrTi_{1-x}Rh_xO_3$. The molar ratio represented by M(rhodium)/M(titanium+rhodium) of the rhodium-doped strontium titanate particles is preferably 0.001 to 0.03, more preferably 0.01 to 0.03. The molar ratio in this range allows an increase in the amount of oxygen defects in crystals to be suppressed and thus a high photocatalytic activity is achieved.

As described above, the rhodium-doped strontium titanate particles used in the present invention, which have the absorbance as described above as well as the very fine primary particle shape, which is measured with SEM have a high photocatalytic activity.

Method for producing rhodium-doped strontium titanate particles

As the production method of the photocatalyst particles for hydrogen generation used in the present invention, dry reaction methods such as a solid-phase reaction method, as well as wet reaction methods such as a sol-gel method, a complex polymerization method, and a hydrothermal reaction method may be used. For example, as the production method by the gel-sol method, which is one of the wet reaction methods, a method may be mentioned in which a metal alkoxide or a metal chloride is used as a raw material. A hydroxide containing titanium is produced by a hydrolytic reaction of the raw material with water. The hydroxide is fired at 600°C or above for crystallization.

<u>Method for producing particles by using an aqueous solution containing rhodium-doped strontium titanate precursor</u>

As the production method of the rhodium-doped strontium titanate particles as the photocatalyst particles for hydrogen generation in the present invention, a thermal decomposition method, that is, aqueous solution thermal decomposition method, using an aqueous solution which contains a strontium ion, a titanium ion, and a rhodium ion may be used suitably. The aqueous solution thermal decomposition method is a method in which by heating an aqueous solution containing a water-soluble transition metal complex, water as a solvent is evaporated thereby triggering a dehydration polycondensation reaction among the transition metal complexes, followed by firing to obtain crystallized particles. In this method, since a transition metal complex having a mild hydrolysis reaction rate is used as the raw material, the transition metal complex can be stably dissolved in water. By heating the aqueous solution containing the transition metal complex which can be stably dissolved in water, with evaporation of water as the solvent, the dehydration polycondensation reaction among the transition metal complexes occurs mildly. It is considered that, due to combination with a water-dispersible organic polymer particles described later, the generation speed of crystal nuclei during the thermal decomposition is slow, and as a result, an advantage that crystals can be refined is obtained.

In one embodiment of the production method of the rhodium-doped strontium titanate particles, preferably, an aqueous solution containing a rhodium-doped strontium titanate precursor is prepared by mixing a titanium compound, a strontium compound, a rhodium compound and a hydrophobic complexing agent together to prepare a mixture and dissolving the mixture in water. The aqueous solution thus obtained is hereinafter referred to as an aqueous solution A. The rhodium-doped strontium titanate precursor is a mixture of a compound having a six-membered ring structure formed by coordinating a hydrophobic complexing agent to titanium ions generated as a result of dissociation of the titanium compound, strontium ions generated as a result of dissociation of a strontium compound and rhodium ions generated as a result of dissociation of a rhodium compound. In the preparation of the aqueous solution A, a titanium compound and a hydrophobic complexing agent are mixed together to prepare an aqueous solution containing a water-soluble titanium complex (an aqueous solution thus obtained being referred to as aqueous solution B). A strontium compound and a rhodium compound are mixed into the aqueous solution B to prepare an aqueous solution containing a rhodium-doped strontium titanate precursor, that is, the solution A. The water-soluble titanium complex is one in which a hydrophobic complexing agent has been coordinated to titanium ions generated as a result of dissociation of the titanium compound.

In the production method of the rhodium-doped strontium titanate particles, preferably, in addition to the titanium compound, a hydrophobic complexing agent is added as the starting material from the viewpoint of rendering a $Ti^{4+}$-containing titanium compound, that is originally sparingly soluble in water, soluble in water. Hydrolysis can be suppressed by coordinating the hydrophobic complexing agent to titanium ions for complexing of the titanium ions. Alkoxides of titanium and chlorides of titanium may be used as the titanium compound. Alkoxides of titanium include titanium tetramethoxide, titanium tetraethoxide, titanium tetra-n-propoxide, titanium tetraisopropoxide, and titanium tetra-n-butoxide and others. Chlorides of titanium include titanium tetrachloride, titanium tetrafluoride and titanium tetrabromide.

The hydrophobic complexing agent used in the production method of the rhodium-doped strontium titanate particles can be coordinated to titanium ions, allowing a hydrophobic portion to be exposed to a solvent phase side of the water-soluble titanium complex when coordinating to the titanium ions. Preferred hydrophobic complexing agents include diketone compounds and catechol compounds. Preferred diketone compounds are diketone compounds represented by general formula: $Z_1$-CO-CH$_2$-CO-$Z_2$ wherein $Z_1$ and $Z_2$ independently represent an alkyl or alkoxy group. Preferred diketone compounds represented by the above general formula include acetylacetone, ethyl acetoacetate, propyl acetoacetate, butyl acetoacetate and others. Preferred catechol compounds include ascorbic acid, pyrocatechol, tert-butylcatechol and others. Still more preferably, acetylacetone and ethyl acetoacetate that have a very high complexing capability to titanium in the water solution are used. This can suppress intermolecular polymerization by intermolecular dehydration polycondensation that occurs when a hydroxyl group that is a hydrophilic portion is exposed to a solvent phase side. Therefore, in thermal decomposition, refinement of crystal nuclei and refinement of particles after a thermal decomposition reaction are achieved.

In a preferred embodiment of the production method of the rhodium-doped strontium titanate particles, in addition to the hydrophobic complexing agent, a hydrophilic complexing agent may be used. The hydrophilic complexing agent is preferably a carboxylic acid, more preferably a carboxylic acid represented by formula $R^1$-COOH wherein $R^1$ represents a $C_{1-4}$ alkyl group, or a hydroxy acid or dicarboxylic acid having 1 to 6 carbon atoms. Such hydrophilic complexing agents include water-soluble carboxylic acids such as acetic acid, lactic acid, citric acid, butyric acid, and malic acid. Still more preferred water-soluble carboxylic acids are acetic acid or lactic acid. This achieves the suppresion of a hydrolytic reaction of the titanium compound or an improvement in solubility of the titanium compound in water.

The solvent for complex formation is water. In another preferred embodiment, a mixture of water-soluble organic solvents with water may be used as the solvent. Use of the water-soluble organic solvents can improve the solubility of the transition metal compound. Specific examples of water-soluble organic solvents include methanol, ethanol, n-propanol, isopropanol, cellosolve-based solvents and carbitol-based solvents.

In a preferred embodiment of the present invention, the water-soluble titanium complexes may be those described in JP 2012-056947A. Specifically, titanium complexes with the number of coordinations to titanium ions being 6 are usable. Such titanium complexes comprise: titanium ions; a first ligand that is represented by $Z_1$-CO-CH$_2$-CO-$Z_2$ wherein $Z_1$ and $Z_2$ independently represent an alkyl or alkoxy group and further functions as a bidentate ligand; a second ligand that is a carboxylate; third and fourth ligands that are independently selected from the group of alkoxides and hydroxide ions; and a fifth ligand that is $H_2O$, each of which is coordinated to the titanium ions.

Preferably, the $Sr^{2+}$-containing strontium compound is soluble in water and does not retain a residue of anion component upon heat crystallization. Preferred are, for example, strontium nitrate, strontium acetate, strontium chloride, strontium bromide, strontium lactate, strontium citrate and others.

The $Rh^{3+}$-containing rhodium compound is preferably soluble in water and, upon heat crystallization, does not retain a residue of anion component. The rhodium compounds include rhodium nitrate, rhodium acetate, rhodium chloride, rhodium bromide, rhodium lactate, rhodium citrate. $Rh^{4+}$-containing molecules may be used as the rhodium compound. Hydrophilic complexing agents such as lactic acid, butyric acid, and citric acid and others may be used for the purpose of improving the solubility of the strontium compound or the rhodium compound in water.

In the production of the rhodium-doped strontium titanate particles used in the production method according to the present invention, preferably, the mixing ratio of various starting materials in the aqueous solution A is 0.01 to 0.2 mole, more preferably 0.02 to 0.1 mole, per 100 g of water for the titanium compound containing one atom of titanium, is 1 to 1.1 times by mole larger than the titanium compound containing one atom of titanium for the strontium compound, is a desired doping amount for the rhodium compound, is 0.005 to 0.4 mole, more preferably 0.015 to 0.15 mole, for the hydrophobic complexing agent, and is 0.01 to 0.2 mole, more preferably 0.025 to 0.15 mole, for the hydrophilic complexing agent. When the starting materials are respectively mixed at the above mixing ratio, the titanium compound is well rendered soluble in water and a high degree of crystallization and refinement of particles after thermal decomposition are possible. The molar ratio of the hydrophobic complexing agent to the titanium compound is preferably 0.5 to 2 mole, more preferably 0.8 to 1.2, per mole of the titanium compound containing one atom of titanium. The molar ratio in the above-defined range allows the progress of a hydrolytic reaction of the titanium compound and the decrease in water solubility caused by hydrophobicity of molecules of the titanium compound to be suppressed. The molar ratio of the hydrophilic complexing agent to the titanium compound is preferably 0.2 to 2 moles, more preferably 0.3 to 1.5 moles, per mole of the titanium compound containing one atom of titanium. The molar ratio in the above-defined range allows to suppress the progress of a hydrolytic reaction of the titanium compound and improve the solubility of the titanium compound in water. In the aqueous solution A, the pH value that can maintain stability of individual ions in the aqueous solution and can realize the refinement of particles after crystallization is preferably 2 to 6, more preferably 3 to 5. The pH value in the above-defined range allows coarsening of crystals caused by the promotion of a hydrolytic polycondensation which promotion is developed under a strong acid or strong alkali atmosphere to be suppressed.

Further, in the production of the rhodium-doped strontium titanate particles used in the production method according to the present invention, preferably, water dispersible organic polymer particles are added to the aqueous solution A (a liquid obtained by adding water dispersible organic polymer particles to the aqueous solution A being hereinafter referred to as dispersion). A powder of rhodium-doped strontium titanate particles can be obtained by heating the dispersion for crystallization. The addition of water-dispersible organic polymer particles to the aqueous solution A can reduce the degree of aggregation of the rhodium-doped strontium titanate particles to increase the porosity or the void ratio of a powder of the rhodium-doped strontium titanate particles.

Spherical latex particles or an oil-in-water (O/W) emulsion can be used as the water-dispersible organic polymer particles. Rhodium-doped strontium titanate fine particles are obtained by adding the water-dispersible organic polymer particles. A secondary particle, an aggregation of such particles, is porous. A mechanism through which such fine primary particles are obtained and, consequently, the porosity of secondary particles obtained by the aggregation thereof becomes high will be as follow. However, the scope of the present invention is not limited to this mechanism. The addition of the water-dispersible organic polymer particles allows the water-soluble titanium complex, strontium ions and rhodium ions, which are polar molecules, to be adsorbed to the surface of the polymer particles that are polar in water. In a process of heat crystallization, the titanium complex present on the surface of the polymer particles is hydrolyzed to produce crystal nuclei of rhodium-doped strontium titanate. Since the crystal nuclei on the surface of the polymer particles are present with a physical distance therebetween, there is little opportunity of bonding among the crystal nuclei and, consequently, the growth of crystals proceeds slowly, leading to a small primary particle diameter of the rhodium-doped strontium titanate particles. Further, it is considered that, although the formed rhodium-doped strontium titanate particles are bound to one another as a result of the disappearance of polymer particles by thermal decomposition, the presence of the polymer particles suppresses the aggregation of the rhodium-doped strontium titanate particles, resulting in an increase in void ratio of secondary particles as an aggregate, that is, an increase in porosity.

The dispersed diameter of the water-dispersible organic polymer particles is preferably 10 to 1000 nm, more preferably 30 to 300 nm. The dispersed particles diameter in the above-defined range allows the physical distance among the crystal nuclei of rhodium-doped strontium titanate to be increased. Thus, after the heat crystallization, the rhodium-doped strontium titanate particles can be refined. Further, the water-dispersible organic polymer particles are preferably formed a material that, after heat crystallization at 600°C or above, does not retain a residue of amorphous carbon or the like, which is a residue of the organic polymer particles. Suitable materials include polymerization products of monomer units of styrene, acryl, urethane, epoxy or the like, or polymerization products of a plurality of the monomer units. The addition amount of the water-dispersible organic polymer particles is preferably 1 to 20 times, more preferably 3 to 15 times larger than that of the weight of rhodium-doped strontium after crystallization at high temperatures. The addition of the amount of the polymer particles in the above-defined range to the aqueous solution A allows the aggregation of the particles after the crystallization to be suppressed and thus the primary particle diameter of the particles is reduced.

In the production method of the rhodium-doped strontium titanate particles, the following method is preferably used as a method for the preparation of the rhodium-doped strontium titanate particles from the dispersion. At the outset, a dried powder is obtained by drying the dispersion at a low temperature of 200°C or below. Rhodium-doped strontium titanate particles can be produced by firing the dried powder for crystallization. The step of drying the dispersion can be followed by the step of firing the dried powder without interval. The firing temperature for the crystallization of rhodium-doped strontium titanate is preferably 800°C (exclusive) to 1100°C (exclusive), more preferably 900°C (inclusive) to 1050°C (inclusive). The firing temperature in the above-defined range allows highly pure rhodium-doped strontium titanate particles to be highly crystallized while the water-dispersible organic polymer particles are thermally decomposed.

Visible light responsive photocatalytic member

The visible light responsive photocatalytic member according to the present invention (hereinafter also referred to as "the photocatalytic member") comprises a substrate and a photocatalytic layer which is fixed on the substrate. The photocatalytic layer contained in the photocatalytic member according to the present invention contains fine photocatalyst particles for hydrogen generation having a small primary particle diameter, and exists as an aggregate which is formed by aggregation of these fine particles. Therefore, the void ratio of the photocatalytic layer is high, namely, the porosity thereof is high, so that the specific surface area of the photocatalytic layer is large. As a result, when visible light such as sunlight is irradiated to the photocatalytic member, hydrogen can be stably generated by splitting water for a long period of time.

The photocatalytic layer contained in the photocatalytic member according to the present invention includes an aggregate of photocatalyst particles for hydrogen generation that have a microstructure of a small primary particle diameter, and, thus, the contact area between the particles and the substrate is large. Thus, the photocatalytic member in which the substrate and the photocatalytic layer firmly adhere to each other can be obtained.

The photocatalytic layer contained in the photocatalytic member according to the present invention includes an aggregate of photocatalyst fine particles, and, thus, this fine particles allows the binding property among the particles to be good. Consequently, a photocatalytic layer can be formed of the particles that are evenly disposed. Further, the binding property among the particles allows the photocatalytic layer to be thick .

The photocatalytic layer may include a layer or a film over the entire substrate, or a layer or a film on part of the substrate. The photocatalytic layer may also include partial island formation on the surface of the substrate. Further, the photocatalytic layer may be in patterns of form such as wave, comb, fiber, or mesh. In the present invention, the photocatalytic layer means an aggregate of photocatalyst particles present in the above forms on the substrate.

The thickness of the photocatalytic layer of the photocatalytic member according to the present invention is preferably 0.1 $\mu$m or more to 100 $\mu$m or less. The thickness of the photocatalytic layer is more preferably 0.2 $\mu$m or more to 30 $\mu$m ore less. The thickness of the photocatalytic layer is defined as a length from a point on the substrate to an uppermost portion of the photocatalytic layer in a direction perpendicular to the horizontal tangent at the point. For example, when the substrate is a flat plate as shown in Fig. 1 which will be illustrated later, the thickness of the photocatalytic layer is a length from the surface of the substrate to an uppermost portion of the photocatalytic layer in a vertical direction. When the surface of the substrate is formed of fibers or the like, the thickness of the photocatalytic layer is a length from a point on the surface of the fibers to an uppermost portion of the photocatalytic layer in a direction perpendicular to the horizontal tangent at the point.

In the photocatalytic member according to the present invention, as the photocatalyst particles for hydrogen generation contained in the photocatalytic layer, photocatalyst particles for hydrogen generation having a primary particle diameter of 100 nm or less, preferably 70 nm or less, may be used. By virtue of this, the photocatalytic member of the present invention can enlarge surface area capable of being in contact with water, so that a water-splitting reaction with high efficiency may be realized. In addition, because the photocatalytic member of the present invention has a small primary particle diameter as mentioned above, number of contact points between the substrate and the photocatalyst particles for hydrogen generation per unit area is very large, so that mechanical strength between the substrate and the particles or among the particles is good. Therefore, removal of the photocatalyst particles for hydrogen generation from the substrate as well as segregation thereof on the substrate can be suppressed. Consequently, the photocatalytic member according to the present invention can stably generate hydrogen for a long period of time under visible light irradiation.

The photocatalytic layer contained in the photocatalytic member according to the present invention has pores which are formed among the photocatalyst particles for hydrogen generation. The photocatalytic layer in the present invention has a porous structure formed of the pores, so that efficient diffusion of water from outside the layer to inside the layer as well as release of hydrogen formed in the layer to outside the layer can be realized. By virtue of this, the photocatalytic member of the present invention can generate hydrogen by efficient water-splitting reaction. The pore diameter of the photocatalytic layer contained in the photocatalytic member of the present invention is preferably in the range of 10 nm or more to 200 nm or less, more preferably in the range of 20 nm or more to 100 nm or less.

In the present invention, the pore diameter of the photocatalytic layer means the diameter of pores present among the photocatalyst particles contained in the photocatalytic layer. The pore diameter can be determined by measuring pore distribution using nitrogen gas absorption and desorption treatment according to BJH method. Specifically, for example, a gas absorption pore distribution analyzer (manufactured by BEL JAPAN, INC., BELSORP-mini) can determine an adsorption and desorption isotherm using nitrogen gas to obtain a pore volume distribution curve by plotting Log differential pore volume against the diameter of pore according to BJH method. The diameter of pore at the peak position of the pore volume distribution curve is determined as a pore diameter of the photocatalytic layer.

Substrate

The substrate used in the photocatalytic member according to the present invention may be a photocatalytic layer that can be fixed on the substrate by firing. Examples of the substrate are preferably formed of an inorganic substance that, even when heated at 250°C, is not chemically decomposed. More preferably, the substrate is formed of an inorganic substance that, even when heated at 300°C, is not decomposed. More specifically, inorganic oxides or metals can be used. Still more specifically, inorganic oxides such as glasses (soda lime glass and borosilicate glass), quartz, aluminum oxide (alumina), and ceramics and metal such as titanium, aluminum, iron, and stainless steel can be used. At least one material selected from the group consisting of glasses, alumina, and quartz can be more preferably used.

The shape of the substrate is not particularly limited as long as the shape allow the photocatalytic layer to be fixed on the surface thereof by firing. Examples of preferred substrates include a flat plate having a smooth surface (for example, a glass substrate and an alumina substrate) or a flat plate having a porous surface (for example, anodized alumina), a porous body (for example, porous ceramics), and a fiber body (for example, glass fibers and carbon fibers). More preferably, highly light-transparent glass fibers can be used as the fiber body. Thus, light transmission into further inside of the layer against the surface irradiated light in the fiber body is possible, and an enlargement in number of light absorption is expected. Preferably, these substrates have holes that are open pores within the substrate. The diameter of a hole is preferably 0.1 to 30 $\mu$m. Thus, a hydrogen gas produced by a water-splitting reaction on the surface of the photocatalyst particles can be diffused into pores within the photocatalytic layer and then the hydrogen gas can float in water via the holes within the substrate, which are larger than the pores within the photocatalytic layer, the hydrogen gas can be more efficiently generated.

Method for producing visible light responsive photocatalytic member

The method for producing the photocatalytic member of the present invention is not particularly limited as long as the photocatalyst particles for hydrogen generation can be fixed on the substrate. A method in which a slurry containing photocatalyst particles for hydrogen generation dispersed by a wet method is coated on the substrate, dried, and then fired may be preferably used.

Preparation of slurry containing photocatalyst particles for hydrogen generation

In the present invention, it is preferable to prepare a slurry by dispersing photocatalyst particles for hydrogen generation by a wet method. As a wet dispersion method, mechanical dispersion methods such as an ultrasonic beam irradiation, a ball milling, and a bead milling are preferably used. A solvent is not particularly limited as long as the photocatalyst particles for hydrogen generation can be dispersed. Water or organic solvents such as ethanol, or organic vehicle solvents such as $\alpha$-terpineol may be used. In order to enhance the dispersibility of the photocatalyst particles for hydrogen generation in the solvent, a dispersant may be added thereto.

In the present invention, preferably, a pore-forming agent is added to the slurry containing the photocatalyst particles for hydrogen generation. When this slurry is coated on the substrate and then fired, the portion of the pore-forming agent disappears by firing, so that the layer can be provided with holes in which hydrogen gas can readily diffuse. That is, when large holes in which hydrogen gas can readily diffuse are arranged among the photocatalyst particles for hydrogen generation which are fixed on the substrate, generation efficiency of hydrogen gas can be enhanced. The pore-forming agent usable in the present invention is not particularly limited as long as it is an organic substance which can disappear by firing treatment. Examples of the pore-forming agent include, preferably, a granular polymer dispersion such as spherical latex particles (acryl-based polymer, styrene-based polymer) and a oil-in water type emulsion particles. The particle diameter of the particles contained in the pore-forming agent usable in the present invention is in the range of 0.1 $\mu$m or more to 30 $\mu$m or less, preferably in the range of 0.2 $\mu$m or more to 10 $\mu$m or less.

Coating step of coating slurry to substrate

Examples of coating method of the slurry prepared on the substrate include a spin coating method, a dip coating method, a spraying method, a doctor blade method, an electrophoresis method, a screen printing method, and the like. The coating method can be properly selected in accordance with shape and kind of the substrate.

The thickness of the slurry to be coated on the substrate in order to form the photocatalytic layer of the present invention (the thickness is hereinafter referred to as "coating thickness") is in the range of 0.1 to 50 $\mu$m. Depending on light absorption coefficient of the photocatalytic member to be used, the layer thickness can be controlled. For example, when the layer thickness of 1 $\mu$m or less is formed, a spin coating method, a dip coating method, a spraying method, or the like are preferably used. When the layer thickness of 1 $\mu$m or more is formed, a screen printing method, a doctor blade method, an electrophoresis method, or the like are preferably used.

Drying step

In the visible light responsive photocatalytic member according to the present invention, after the slurry is coated on the substrate, preferably, the solvent is dried. The drying temperature is preferably in the range of 30°C or higher to 150°C or lower, more preferably in the range of 40°C or higher to 120°C or lower. When the drying temperature is within this range, crack and so forth are not formed, so that excellent adhesion to the substrate can be realized.

Firing step of fixing Photocatalyst particles for hydrogen generation on substrate

In the present invention, in order to fix the photocatalyst particles for hydrogen generation on the substrate, preferably, the substrate coated with the slurry is fired. The firing temperature is preferably equal to or higher than the heat decomposition temperature of the organic substances such as the solvents and the dispersants. More preferably, the firing temperature is such that sintering between the substrate and the photocatalyst particles for hydrogen generation or among the photocatalyst particles for hydrogen generation can be facilitated. Specifically, the firing temperature is preferably in the range of 300°C or higher to 700°C or lower, more preferably in the range of 400°C or higher to 600°C or lower. Firing is conducted at this temperature, the visible light responsive photocatalytic member having excellent adhesion to the substrate, high bindability among the particles, and stability for a long period of time can be realized.

Photocatalytic module for splitting water

The photocatalytic module for splitting water according to the present invention comprises the visible light responsive photocatalytic member. In a preferred embodiment of the present invention, the photocatalytic module for splitting water according to the present invention has a nearly transparent light incident surface and is structured such that light is incident on the visible light responsive photocatalytic member disposed within the module. In addition, the photocatalytic module has a sealed panel configuration for containing water so that the visible light responsive photocatalytic member can be always in contact with water. In a more preferred embodiment of the present invention, the photocatalytic module for splitting water according to the present invention further comprises a mechanism such as a water passing hole through which water, the amount of which is reduced with the progress of the water-splitting reaction, is successively added and supplied. The photocatalytic module for splitting water having the above construction allows commercially available production of hydrogen.

System for producing hydrogen

The system for producing hydrogen according to the present invention comprises the photocatalytic module for splitting water. The hydrogen production system according to the present invention comprises, as configuration thereof, a water supply apparatus, a filtration apparatus for removing impurities contained in water to some extent, a photocatalytic module for splitting water, a hydrogen separation apparatus, and a hydrogen storage apparatus. The hydrogen production system having the above construction allows production of hydrogen from sunlight and water as a renewable energy source.

EXAMPLES

The present invention will be explained in more detail by following examples. The scope of the present invention however is not limited to these examples.

Preparation of hydrogen generating photocatalyst (rhodium-doped strontium titanate) particles 1

0.02 mole (2.003 g) of acetylacetone (manufactured by Wako Pure Chemical Industries, Ltd.) as a hydrophobic complexing agent was added to a 20-mL sample bottle, and 0.02 mole (5.684 g) of titanium tetra-iso-propoxide (manufactured by Wako Pure Chemical Industries, Ltd.) was added thereto with stirring at room temperature to prepare a yellow solution containing a titanium-acetylacetone complex. This yellow titanium-acetylacetone solution was added to 50 mL of an aqueous solution containing 0.32 mol/L of acetic acid with stirring at room temperature. After the addition, the resulting mixture was stirred at room temperature for about 1 hour, and further at 60°C for about 1 hour to prepare a yellow and transparent aqueous solution containing a water-soluble titanium complex.

Next, a portion (10-g) of the aqueous solution containing the water-soluble titanium complex thus prepared was taken (containing 3.41 mmole of titanium in terms of metal titanium). Then, a solution of 3.75 mmole (0.84 g) of strontium acetate 0.5 hydrate (manufactured by Wako Pure Chemical Industries, Ltd.) and 0.70 g of lactic acid (manufactured by Wako Pure Chemical Industries, Ltd.) as a hydrophilic complexing agent dissolved in 3.16 g of distilled water was added to the aqueous solution to prepare a mixed aqueous solution, and further, an aqueous solution containing 5% by weight of rhodium trichloride (manufactured by Wako Pure Chemical Industries, Ltd.) was added to the mixed aqueous solution so that the concentration in terms of the molar ratio of M (rhodium) to M (titanium + rhodium) was 0.02. The resulting mixture was stirred at room temperature for 3 hours to obtain an orange and transparent aqueous solution containing a rhodium-doped strontium titanate precursor. The pH of this aqueous solution was about 4.

Furthermore, an acryl-styrene-based O/W type emulsion (manufactured by DIC, EC-905EF, dispersed particle diameter of 100 to 150 nm, pH: 7 to 9, solid content of 49 to 51%) was added as an organic emulsion so that the solid amount of the acryl-styrene-based O/W type emulsion was 5 times as much as that of rhodium-doped strontium titanate obtained after firing in terms of weight ratio.

The aqueous solution of rhodium-doped strontium titanate precursor with the organic emulsion added thereto thus prepared was dried at 80°C for 1 hour, and then, the dried product was fired at 1000°C for 10 hours for high-temperature crystallization to prepare a powder of strontium titanate particles doped with 2% of rhodium.

The rhodium-doped strontium titanate particles thus prepared were analyzed by X-ray diffractometry. As a result, the rhodium-doped strontium titanate particles were confirmed to have a single-phase perovskite structure. Next, the primary particle diameter thereof was calculated through scanning electron microscopic observation. Specifically, the primary particle diameter was determined by averaging the diameter of the 50 crystal particles in observation, each of which was approximated by a circle, at a magnification of 40,000 times under a scanning electron microscope (manufactured by Hitachi, Ltd., "S-4100"). As a result, it was confirmed that the primary particle diameter was not more than 50 nm and that a fine particle shape was maintained even after high-temperature crystallization treatment.

The optical properties of the rhodium-doped strontium titanate thus obtained were determined. That is, a diffusion reflection spectrum of the rhodium-doped strontium titanate was measured to obtain a spectral reflectance R of the same by using an ultraviolet-visible-near-infrared spectrophotometer equipped with an integrating sphere unit. In this case, the amount of the powder was adjusted so that absorbance A (=1 - spectral reflectance R) at wavelength 315 nm is in the range of 0.86 to 0.87. The absorbance at wavelength 570 nm was 0.648, and the absorbance at wavelength 1800 nm was 0.650.

Preparation of hydrogen generating photocatalyst (rhodium-doped strontium titanate) particles 2

The photocatalyst particles 2 for hydrogen generation were prepared in the same manner as the photocatalyst particles 1 for hydrogen generation, except that the firing temperature was changed to 1050°C.

Preparation of hydrogen generating photocatalyst (lanthanum- and rhodium-doped strontium titanate) particles 3

0.02 mole (2.003 g) of acetylacetone (manufactured by Wako Pure Chemical Industries, Ltd.) as a hydrophobic complexing agent was added to a 20-mL sample bottle, and 0.02 mole (5.684 g) of titanium tetra-iso-propoxide (manufactured by Wako Pure Chemical Industries, Ltd.) was added thereto with stirring at room temperature to prepare a yellow aqueous solution containing a water-soluble titanium-acetylacetone complex. This aqueous solution containing the water-soluble titanium-acetylacetone complex was added to 50 mL of an aqueous solution containing 0.32 mol/L of acetic acid with stirring at room temperature. After the addition, the resulting mixture was stirred at room temperature for about 1 hour, and further at 60°C for about 1 hour to prepare a yellow and transparent aqueous solution containing a water-soluble titanium complex.

Next, a portion (10-g) of the aqueous solution containing the water-soluble titanium complex thus prepared was taken (containing 3.41 mmole of titanium in terms of metal titanium). Then, a solution of 3.75 mmole (0.84 g) of strontium acetate 0.5 hydrate (manufactured by Wako Pure Chemical Industries, Ltd.) and 0.70 g of lactic acid (manufactured by Wako Pure Chemical Industries, Ltd.) dissolved in 3.16 g of distilled water was added to the aqueous solution to prepare a mixed aqueous solution, and further, an aqueous solution containing 5% by weight of rhodium trichloride (manufactured by Wako Pure Chemical Industries, Ltd.) and an aqueous solution of lanthanum nitrate enneahydrate (manufactured by Wako Pure Chemical Industries, Ltd.) were added to the mixed aqueous solution so that the composition after heat crystallization is $Sr_{0.98}La_{0.02}Ti_{0.98}Rh_{0.02}O_3$. The resulting mixture was stirred at room temperature for 3 hours to obtain an orange and transparent aqueous solution containing a lanthanum- and rhodium-doped strontium titanate precursor. The pH of this aqueous solution was about 4.

Furthermore, an acryl-styrene-based O/W type emulsion (manufactured by DIC, EC-905EF, dispersed particle diameter of 100 to 150 nm, pH: 7 to 9, solid content of 49 to 51%) was added as water-dispersible organic polymer particles to the above solution so that the solid amount of the acryl-styrene-based O/W type emulsion was 5 times as much as that of lanthanum- and rhodium-doped strontium titanate obtained after firing in terms of weight ratio, thereby preparing a dispersion.

The dispersion thus prepared was dried at 80°C for 1 hour; and then, the dried product was fired at 1000°C for 10 hours for high-temperature crystallization to obtain a powder of lanthanum- and rhodium-doped strontium titanate particles.

Preparation of hydrogen generating photocatalyst (rhodium-doped strontium titanate) particles 4

Rhodium-doped strontium titanate was prepared by a solid-phase reaction method. Specifically, powders of strontium carbonate (manufactured by Kanto Chemical Co., Ltd.), titanium oxide (manufactured by Soekawa Rikagaku, Ltd., rutile-type), and rhodium oxide ($Rh_2O_3$; manufactured by Wako Pure Chemical Industries, Ltd.) were mixed together at a molar ratio of Sr : Ti : Rh=1.07 : 0.98 :0.02, and then, the resulting mixture was fired at 1000°C for 10 hours to prepare a rhodium-doped strontium titanate powders.

The rhodium-doped strontium titanate particles thus prepared were analyzed by X-ray diffractometry. As a result, the rhodium-doped strontium titanate particles were confirmed to have a single-phase perovskite structure. And also, the primary particle diameter of the rhodium-doped strontium titanate was calculated through scanning electron microscopic observation. As a resultt, the primary particle diameter thereof was about 500 nm.

The optical properties of the rhodium-doped strontium titanate thus prepared were determined. As a result, the absorbance at wavelength 570 nm was 0.774, and the absorbance at wavelength 1800 nm was 0.652.

Preparation of hydrogen generating photocatalyst (rhodium-doped strontium titanate) particles 5

The photocatalyst particles 5 for hydrogen generation were prepared in the same manner as the photocatalyst particles 1 for hydrogen generation, except that the firing temperature was changed to 1100°C.

Preparation of hydrogen generating photocatalyst (lanthanum- and rhodium-doped strontium titanate) particles 6

The photocatalyst particles 6 for hydrogen generation were prepared in the same manner as the photocatalyst particles 3 for hydrogen generation, except that the firing temperature was changed to 1100°C.

Supporting co-catalyst on rhodium-doped strontium titanate particles

1 g of the powder containing the obtained rhodium-doped strontium titanate particles was added to 1.32 g of an aqueous solution containing 1% by weight of chloroplatinic acid hexahydrate (manufactured by Wako Pure Chemical Industries, Ltd.) as a raw material of a co-catalyst, and then, the resulting mixture was suspended and dispersed by ultrasonic beam irradiation. Thereafter, the suspension or dispersion was kneaded by using a mortar for 30 minutes, while being dried and condensed, to obtain a paste. Next, this paste was dried at room temperature for 2 hours to recover powders, and then, the powders were atmospherically fired at 400°C for 30 minutes to prepare rhodium-doped strontium titanate particles 1 to 6 doped with 0.5% by weight of platinum as a co-catalyst.

Preparation of photocatalytic member by using screen printing method Examples 1 to 5 and Comparative Examples 1 to 4

α-Terpineol (manufactured by Kanto Chemical Co., Inc.), 2-(2-butoxyethoxy) ethanol (manufactured by Wako Pure Chemical Industries, Ltd.), and polyvinyl butyral (manufactured by Tokyo Chemical Industry Co., Ltd., molecular weight 600) were mixed at a ratio of 65 : 15 : 20 (weight ratio), and the mixture was heated in a hermetically-sealed glass container at 60°C for 15 hr to prepare an organic vehicle solution. 0.4 g of the organic vehicle solution and 0.2 g of α-terpineol were mixed, and further 0.2 g of rhodium-doped strontium titanate particles for hydrogen generation supporting 5% by weight of platinum was added thereto. The mixture was manually mixed in a mortar for 3 hours to prepare a paste for screen printing. The paste for screen printing was applied by a screen printing method to an opening of 4 cm × 4 cm provided on a borosilicate glass substrate (5 cm × 5 cm × 1 mm (in thickness)) with a coating thickness shown in Table 1. Thereafter, the coated product was dried at 60°C for one hour and was then fired at 450°C for 30 minutes to prepare visible light responsive photocatalytic members of Examples 1 to 5 and Comparative Examples 1 to 4. The preparation conditions and properties thereof are shown in Table 1.

Preparation of photocatalytic member by using spin coating method Example 6 and Comparative example 5

A mixture of 1 g of each paste for screen printing prepared in Example 1 and Comparative Example 1 with 9 g of ethanol was stirred by a magnetic stirrer for 1 hour to prepare a solution for spin coating. This solution for spin coating was applied on a borosilicate glass substrate (5 cm × 5 cm × 1 mm (in thickness) by a spin coating method at 500 rpm for 5 seconds and at 1500 rpm for 20 seconds. Next, the coated product was dried at 60°C for 1 hour, and then, the dried product was fired at 450°C for 30 minutes to prepare visible light responsive photocatalytic members of Example 6 and Comparative example 5. The preparation conditions and properties thereof are shown in Table 1.

Fine structure of visible light responsive photocatalytic member

The cross-section of each of the obtained visible light responsive photocatalytic members was observed with a scanning electron microscope. As a result of the observation, it was found that both of the films have a porous film structure.

Measurement of thickness of photocatalytic layer of visible light responsive photocatalytic member by scanning electron microscopic observation

The thickness of the photocatalytic layer was measured from the image obtained by the scanning electron microscopic observation of the cross section of the photocatalytic member (magnification of 2000 times). The height from the surface of the substrate to the uppermost portion of the photocatalytic layer was measured as the thickness of the photocatalytic layer. The results were shown in Table 1.

Adhesion test

The adhesion between the substrate and the photocatalytic layer was evaluated by attaching a mending tape (manufactured by Sumitomo 3M Ltd., thickness 63 μm) to the photocatalytic layer on the substrate. The evaluation was specifically conducted as follows. The mending tape was attached to the photocatalytic layer, and a finger was slid across the tape in 5 reciprocating cycles. After 10 seconds, the tape was separated at once. The criteria of the evaluation were as follows. The results were shown in Table 1.

good: After the separation of the tape, the photocatalytic layer stayed on the substrate.
No good: After the separation of the tape, the photocatalytic layer was completely separated from the substrate.

Hydrogen generating activity of visible light responsive photocatalytic member by splitting water

The visible light responsive photocatalytic member was introduced into a separable glass flask with a Pyrex® window, and was mixed with 200 mL of an aqueous solution containing 10% by volume of methanol as a sacrificial reagent to obtain a reaction solution. Next, the glass flask containing this reaction solution was mounted on a closed circulator apparatus. The atmosphere inside the reaction system was purged with argon. Visible light by a 300-W xenon lamp (manufactured by Cermax, PE-300BF) equipped with a UV cutoff filter (L-42, manufactured by HOYA) was applied to the mixture through a Pyrex® window. The amount of hydrogen generated as a result of reduction of water by a photocatalytic reaction was measured for 3 hours after the start of the irradiation by using a gas chromatograph (manufactured by Shimadzu Seisakusho Ltd., GC-8A, TCD detector, MS-5A column). The results were shown in Table 1.

In the visible light responsive photocatalytic members of Examples 1 to 5, it was found that hydrogen was generated in good condition by a reaction of splitting water under visible light irradiation. Moreover, it was confirmed that even after 3 hours of the evaluation, the photocatalyst particles for hydrogen generation were supported on the substrate in the same condition as the initial condition. On the other hand, in the visible light responsive photocatalytic members of Comparative Examples 1 and 2, it was found that almost no hydrogen was generated under visible light irradiation. In addition, when the condition of the visible light responsive photocatalytic members was observed after 3 hours of the evaluation, almost no photocatalyst particles for hydrogen generation were left on the substrate. It was confirmed that the photocatalyst particles for hydrogen generation were removed from the substrate during the evaluation for 3 hours and that they were diffused into the evaluation solution.

[Table 1]

| | Photocatalyst particles for hydrogen generation | | | Film forming method | Coating thickness | Thickness | Adhesion test | Hydrogen generating activity (hydrogen generation amount for 3 hours after the start of irradiation) |
|---|---|---|---|---|---|---|---|---|
| | Particles | Material | Primary particle diameter | | | | | |
| Example 1 | 1 | Rh-STO | 50 nm | Screen printing | 20 μm | 2 μm | Good | 1.64 μmol |
| Example 2 | 1 | R-STRO | 50 nm | Screen printing | 60 μm | 5 μm | Good | 1.62 μmol |
| Example 3 | 1 | Rh-STO | 50 nm | Screen printing | 120 μm | 10 μm | Good | 1.83 μmol |
| Example 4 | 2 | Rh-STO | 70 nm | Screen printing | 60 μm | 5 μm | Good | 1.69 μmol |
| Example 5 | 3 | La,Rh-STO | 50 nm | Screen printing | 60 μm | 5 μm | Good | 0.47 μmol |
| Example 6 | 1 | Rh-STO | 50 nm | Spin coating | 2 μm | 0.2 μm | Good | |
| Comparative Example 1 | 4 | Rh-STO | 500 nm | Screen printing | 20 μm | 2 μm | No good | 0.01 μmol |
| Comparative Example 2 | 4 | Rh-STO | 500 nm | Screen printing | 120 μm | 10 μm | No good | 0.01 μmol |
| Comparative Example 3 | 5 | Rh-STO | 200 nm | Screen printing | 120 μm | 10 μm | No good | |
| Comparative Example 4 | 6 | La,Rh-STO | 200 nm | Screen printing | 120 μm | 10 μm | No good | |
| Comparative Example 5 | 4 | Rh-STO | 500 nm | Spin coating | 2 μm | 0.5 μm | No good | |
| Rh-STO: rhodium-doped strontium titanate La,Rh-STO: lanthan, rohodium-doped strontium titanate | | | | | | | | |

**Claims**

1.  A visible light responsive photocatalytic member comprising:

    a substrate and
    a photocatalytic layer fixed on the substrate, wherein
    the photocatalytic layer comprises photocatalyst particles that have a primary particle diameter of not more than 100 nm and are capable of generating hydrogen by splitting water under visible light irradiation.

2.  The visible light responsive photocatalytic member according to claim 1, wherein the primary particle diameter of the photocatalyst particles are not more than 70 nm.

3.  The visible light responsive photocatalytic member according to claim 1 or 2, wherein pores having a size of 10 nm or more to 200 nm or less are formed among the photocatalyst particles.

4.  The visible light responsive photocatalytic member according to any one of claims 1 to 3, wherein the substrate is formed of an inorganic substance which, when heated at 250°C, is not decomposed.

5.  The visible light responsive photocatalytic member according to any one of claims 1 to 4, wherein the substrate is a flat plate body, a flat plate body having a porous surface, a porous body, or a fiber body.

6.  The visible light responsive photocatalytic member according to any one of claims 1 to 5, wherein the photocatalyst particles are rhodium-doped strontium titanate particles.

7.  A method for producing the visible light responsive photocatalytic member according to any one of claims 1 to 6, the method comprising steps of:

    preparing a slurry which contains photocatalyst particles capable of generating hydrogen,
    applying the slurry on a substrate, and
    firing the substrate applied with the slurry, wherein
    the slurry, in the applying step, is applied by at least one method selected from a screen printing method, an electrophoresis method, a spin coating method, and a spray coating method.

8.  A photocatalytic module for splitting water comprising the visible light responsive photocatalytic member according to any one of claims 1 to 6.

9.  A hydrogen producing system comprising the photocatalytic module for splitting water according to claim 8.

10. A method for producing hydrogen, wherein the visible light responsive photocatalytic member being in contact with water according to any one of claims 1 to 6 is irradiated with visible light.

11. Use of the visible light responsive photocatalytic member according to any one of claims 1 to 6 for production of hydrogen.

FIG. 1

**EP 3 012 022 A1**

<table>
<tr><td colspan="2"><strong>INTERNATIONAL SEARCH REPORT</strong></td><td>International application No.<br>PCT/JP2014/066451</td></tr>
</table>

A. CLASSIFICATION OF SUBJECT MATTER
*B01J35/02*(2006.01)i, *B01J23/58*(2006.01)i, *B01J37/02*(2006.01)i, *C01B3/04*
(2006.01)i

According to International Patent Classification (IPC) or to both national classification and IPC

B. FIELDS SEARCHED

Minimum documentation searched (classification system followed by classification symbols)
B01J35/02, B01J23/58, B01J37/02, C01B3/04

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
|---|---|---|
| X | JP 09-262473 A (Mitsubishi Heavy Industries, Ltd.), 07 October 1997 (07.10.1997), claims 1, 3, 4; paragraph [0006]; examples (Family: none) | 1-5,8-11 |
| Y | Sayuri OKUNAKA et al., "Shinki Soft Kagaku Process ni yoru Kashiko Otosei SrTiO3-kei Hikari Shokubai no Kaihatsu", Shokubai Toronkai Toronkai A Yokoshu, 14 September 2012 (14.09.2012), vol.110th, page 503 | 1-11 |
| Y | JP 2003-334446 A (National Institute of Advanced Industrial Science and Technology), 25 November 2003 (25.11.2003), claim 1; paragraph [0001]; example 1 (Family: none) | 1-5,7-11 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>10 July, 2014 (10.07.14) | Date of mailing of the international search report<br>16 September, 2014 (16.09.14) |
|---|---|
| Name and mailing address of the ISA/<br>Japanese Patent Office | Authorized officer |
| Facsimile No. | Telephone No. |

Form PCT/ISA/210 (second sheet) (July 2009)

19

**INTERNATIONAL SEARCH REPORT**

International application No.

PCT/JP2014/066451

C (Continuation).   DOCUMENTS CONSIDERED TO BE RELEVANT

| Category* | Citation of document, with indication, where appropriate, of the relevant passages | Relevant to claim No. |
|---|---|---|
| Y | Kazuhiko MAEDA et al., A precursor route to prepare tantalum (V) nitride nanoparticles with enhanced photocatalytic activity for hydrogen evolution under visible light, Applied Catalysis A: General, 2009, Volume 370, Issues 1-2, pp. 88-92 | 1-5,7-11 |
| Y | JP 2001-219073 A (Sharp Corp.), 14 August 2001 (14.08.2001), claims 1, 2; paragraphs [0001], [0017], [0019] (Family: none) | 1-11 |
| E,X | JP 2014-118594 A (Fujifilm Corp.), 30 June 2014 (30.06.2014), claims 4, 6; paragraphs [0026], [0030], [0041] to [0043] (Family: none) | 1,3-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012052184 A
- JP 2012056947 A

**Non-patent literature cited in the description**

- **SASAKI et al.** *J. Phys. Chem. C,* 2009, 17536-17542
- **CRONEMEYER et al.** *Phys. Rev.,* 1959, vol. 113, 1222-1225